# EUROPEAN PATENT APPLICATION

(11) **EP 3 617 104 A1**
(43) Date of publication of application: **04.03.2020**
(21) Application number: 18382637.9
(22) Date of filing: 31.08.2018
(51) Int. Cl.: B65G 23/18, B65G 23/44

(54) **TENSIONING SYSTEM FOR A CONVEYOR BELT**

(71) Applicant: Afher Eurobelt, S.A., 47012 Valladolid (ES)
(72) Inventor: SAN MIGUEL NUÑEZ, JAVIER, 17012 VALLADOLID (ES)
(74) Representative: Temiño Ceniceros, Ignacio

(57) **Abstract**

A tensioning system for a direct drive conveyor belt (1, 1A) comprising an endless belt and including at least one ferric and/or magnetic and/or electromagnetic component and at least one drive element (2, 2A, 2B) configured for driving the conveyor belt (1, 1A) between an entry point and an exit point, and comprising at least one electric or magnetic field-generating element (22, 25) integrated in the drive element (2, 2A, 2B) or in the conveyor belt (1, 1A) and configured for attracting the ferric, magnetic or electromagnetic components of the conveyor belt (1, 1A) to a shaft of the drive element (2, 2A, 2B), or vice versa, for attracting them from the drive shaft (2, 2A, 2B) to the conveyor belt (1, 1A), through the action of said electric or magnetic field.

## Description

The object of the present invention relates to a conveyor belt incorporating a tensioning element associated with the traction system which enables movement of the conveyor belt. This tensioning element has the particularity of being configured so that the conveyor belt and the mentioned tensioning system are attracted to one another as a result of the interaction between magnetic and/or electric fields, such that any type of unwanted separation between the conveyor belt and the mentioned traction system is prevented.

### TECHNICAL FIELD OF THE INVENTION

The present invention generally relates to motor-driven conveyors, and more particularly to conveyor belts comprising a traction system, which can be a gear, a take-up roller, a belt drive, or another equivalent system, configured for enabling the movement of the mentioned conveyor belt.

### PRIOR ART

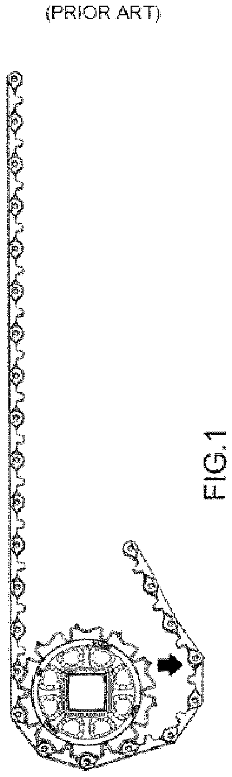

In the normal operation of a conveyor belt, the conveyor belt tends to become disengaged at the exit of the drive shaft, losing engagement, or in other words, losing traction, as can be seen in Figure 1. As can be seen in said figure, the belt becomes disengaged and only meshes in about one fourth of the circumference thereof, which is insufficient and rather ineffective because the teeth and the gears in the modules also suffer more as they are not properly attached to one another. That is due mainly to the stretching produced in the conveyor belt either as a result of variations in temperature or of it being subjected to a very high load and/or speed, which would furthermore cause the conveyor belt to skip or slip when it is driven or pulled on. In any case, the operation would not be correct either at low loads and/or speeds.

To solve this problem, the most commonly used solution in the current state of the art consists of generating tension at the exit of the drive shaft so that the tension prevents the belt from disengaging and skipping or sliding in its traction system.

Mechanical means which allow generating tension in the conveyor belt at the exit of the drive shaft are available today. For example, in the so-called positive drive belts usually manufactured in polyurethane, tension is achieved by placing a limiter in the exit region of the gears so that it supports the conveyor belt and holds it against the gear, as described, for example, in document ES 2 370 654 T3 or in document WO 2018/111743 A1. As a downside, solutions of this type generate hard- or impossible-to-clean areas and require critical adjustment maintenance operations as regards to the position of the tensioning elements as they have to be practically in contact with the drive shaft, increasing maintenance costs. This solution poses a problem in many sectors, particularly the food sector in which cleaning the conveyor belts is a critical condition in the design thereof.

Specifically, document ES 2 370 654 T3 describes a direct drive conveyor belt comprising: an endless thermoplastic belt; at least one drive pulley wherein a drive pulley arranged between the belt and the pulley has teeth and the other drive pulley arranged between the belt and the pulley has grooves which are suitable for receiving the teeth when the belt wraps around the pulley to an exit point, wherein the drive pulley and the belt have different pitches; characterized by a position limiter arranged against the belt close to the exit point such that the driven tooth will remain coupled to the groove in which the driven tooth is received for rotating the pulley equivalent to more than the length of a pitch of the pulley.

On the other hand, document WO 2018/111743 A1 describes a conveyor which uses a low-tension, direct drive conveyor belt, a snap-on position limiter for assuring proper engagement of the belt and a drive sprocket. The position limiter includes a body, a limiting surface, and a snap clamp opposite the limiting surface for snapping the position limiter to a mounting shaft. The position limiter can include a mounting arm for mounting a conveyor belt scraper at the front of the position limiter. Mounting plates at the end of the conveyor support a mounting shaft for mounting the position limiter or other conveyor components in place relative to the drive sprocket.

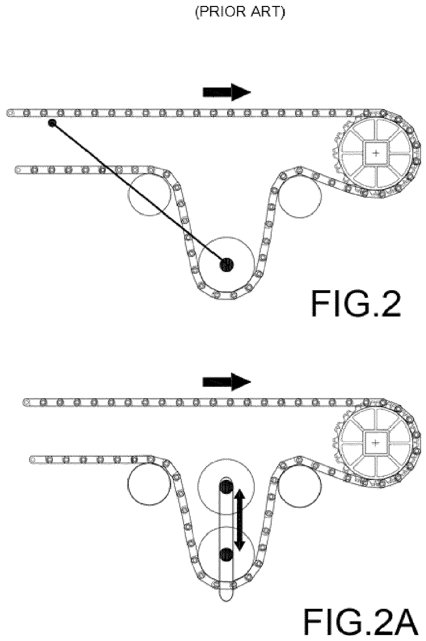

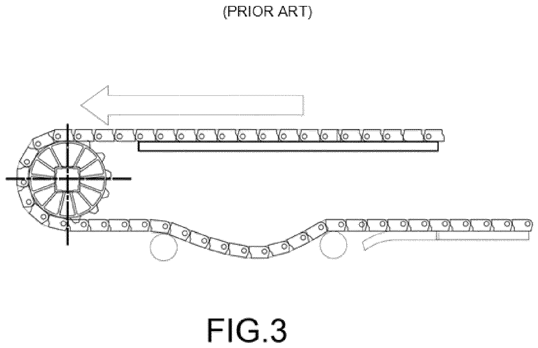

Other characteristic examples are the placement of gravity tensioning elements (Figure 2) or the use of the actual weight of the conveyor belt prior to the generation of suspended parts close to the drive shaft (Figure 3).

In the first case (Figure 2), with the use of gravity tensioning elements tension is generated in the belt due to the weight of a roller, which in turn results in the teeth of the gear ring of the drive shaft being tensioned at the exit thereof and not becoming disengaged. This solution is more expensive and complex, and the conveyor belt experiences more stress as it is subjected to reverse rotations with tension. This solution is imprecise since more tension than required may be generated, forcing the belt unnecessarily. Finally, it is a solution involving complex cleaning.

In the second case (Figure 3), the weight for generating tension in the conveyor belt is achieved with suspended parts generated for that purpose. This solution simplifies the design and cleaning with respect to the solution shown in Figure 2, but sufficient tension is not always achieved between the teeth and the gear ring of the drive shaft given that there are situations in which the required weight cannot be reached with only the weight of the suspended part, for example, in applications with narrow belts and even with high-speed, moderately wide belts.

Document WO 2017/192329 A1 describes a plurality of components of a conveyor system designed for reducing take-up tension in a returnway of a conveyor. A snub roller in the returnway engages and drives a portion of the conveyor belt at a speed that is faster than the speed of a drive for the conveyor belt. A weighted roller between a drive and a synchronized sprocket tied to the variable speed drive alternatively reduces the take-up load in a conveyor belt. The complexity of the system for achieving tension in the gears can be seen in this document. Indeed, this complexity results in greater difficulty in system cleaning, system maintenance, and a higher cost.

As indicated above, the present invention is a conveyor belt incorporating a tensioning element associated with the traction system which enables movement of the conveyor belt. This tensioning element has the particularity of being configured so that the conveyor belt and the mentioned tensioning system are attracted to one another as a result of the interaction between magnetic and/or electric fields, such that any type of unwanted separation between the conveyor belt and the mentioned traction system is prevented. The use of magnetic forces in conveyor belts is, however, already known, for example, in documents WO 2015/048642 A1, WO 2012/102857 A1, and WO 2016/060818 A1.

Document WO 2015/048642 A1 describes a magnetic conveyor belt module integrating a magnetic element into the body of the module to attract conveyed articles to the body. The magnetic conveyor module includes a recess for seating a magnetic element and a retention element for retaining a magnetic element within the recess. A cover encapsulates the magnetic element within the body of the module.

Document WO 2012/102857 A1 describes a conveyor belt and a module with magnets describing a modular radius conveyor belt having a magnetic material in adjacent belt rows, including magnets in selected rows of belt modules. Magnets in one belt row attract magnets or the paramagnetic material in adjacent rows to prevent the vibration between rows that could shake a conveyed article out of its preferred position or orientation on the conveyor belt. It is therefore a passive system which, through the attractive magnetic force between consecutive magnets in the modules of the conveyor belt, prevents vibrations of the belt so that the conveyed products experience as little vibration as possible during conveyance.

On the other hand, document WO 2016/060818 A1 describes a conveyor for curved areas comprising a sideflexing conveyor belt and a touchless magnetic bearing at the inside of a turn. The conveyor belt has electrically conductive elements in a side edge. An array of permanent magnets along the conveyor's side rail inside of the turn produces a permanent magnetic field. As the conveyor belt is driven through the turn, the permanent magnetic field induces currents in the electrically conductive material. The currents produce reaction magnetic fields opposed to the permanent magnetic field that result in a radially outward force pushing the conveyor belt away from frictional contact with the side rail. Alternatively, permanent magnets in the side edge of the belt and electrically conductive elements in the conveyor's side rail likewise provide a magnetic bearing. Nevertheless, this second case is also a passive system that does not establish any control whatsoever over the magnetic forces generated in the conveyor belt.

In summary, none of the documents known in the prior art effectively solves the technical problem derived from conveyor belts becoming disengaged in the traction area. Therefore, a system which allows tensioning the conveyor belt by magnetic and/or electrical means solving the aforementioned problems is desired.

### DESCRIPTION OF THE INVENTION

The present invention proposes tensioning the belt by means of attraction between means or elements made of ferric material, magnetic material, or another material, which are inserted in the conveyor belt or manufactured with materials according to attraction needs, and which in collaboration with other elements inserted in the drive means will cause the conveyor belt to remain attached to said drive means and not to become disengaged, assuring its proper traction or engagement. The attraction is configured as a result of the presence of magnetic and/or electric fields that are attracted to one another.

An object of the present invention relates to a tensioning system for a conveyor belt comprising a belt manufactured with materials including ferric or magnetic components which can be included during the actual manufacturing process thereof or by integrally attaching said materials to the belt, and having the particularity of being attracted to the traction system by means of forces created by magnetic and/or electric fields, all this according to the system according to claim 1 or the method according to claim 13. Particular or preferred embodiments of the invention are shown in the dependent claims.

More specifically, the object of the present invention relates to a tensioning system for a direct drive conveyor belt comprising an endless belt and including at least one ferric and/or magnetic component and at least one drive element configured for driving the conveyor belt between an entry point and an exit point. The tensioning system comprises at least one electric or magnetic field-generating element integrated in the drive element or in the conveyor belt and configured for attracting the ferric or magnetic components of the conveyor to a shaft of the drive element through the action of said electric or magnetic field.

In a second aspect of the invention, the method for tensioning a direct drive conveyor belt which is implemented in the described system comprises an endless belt and at least one drive element configured for driving the conveyor belt between an entry point and an exit point, and which method is characterized by comprising the steps of:
integrally attaching or inserting at least one ferric and/or magnetic and/or electromagnetic component in the conveyor belt and integrating at least one electric or magnetic field-generating element in the drive element or in the conveyor belt itself; and
generating an electric or magnetic field in an attachment area between the drive element and the conveyor belt such that the ferric or magnetic or electromagnetic components of the conveyor belt are attracted to a shaft of the drive element through the action of said electric or magnetic field.

It must be borne in mind that the present invention essentially proposes the conveyor belt and the drive element to be attracted to one another. Therefore, it is obvious for one skilled in the art that in addition to being an advantageous solution with respect to the documents mentioned in the prior art, the system is "reversible" to a certain extent given that the field-generating element can be arranged either in the drive element or in the belt itself, interacting with the ferric, magnetic, or electromagnetic elements located in the opposite element, i.e., if the field-generating element (the "active" element) is arranged in the belt, the "passive" element (i.e., the element being attracted) will be arranged in the drive element and vice versa.

Throughout the description and according to the claims, the word "comprises" and variants thereof do not seek to exclude other technical features, additions, components, or steps. For those skilled in the art, other objects, advantages, and features of the invention will be inferred in part from the invention and in part from putting the invention into practice. The following examples and drawings are provided by way of illustration and are not intended to limit the present invention. Furthermore, the invention covers all the possible combinations of particular and preferred embodiments herein indicated.

### BRIEF DESCRIPTION OF THE DRAWINGS

A series of drawings that help to better understand the invention and are expressly related to an embodiment of said invention illustrated as a non-limiting example thereof is very briefly described below.
Figure 1 shows a view of the technical problem conveyor belts described in the prior art currently have.
Figure 2 shows a view of a conveyor belt according to the prior art with two types of gravity tensioning elements (Figures 2A and 2B).
Figure 3 shows a view of a conveyor belt according to the prior art in which the prior generation of suspended parts close to the drive shaft is included.
Figure 4 shows a view of a conveyor belt with a tensioning system according to a first embodiment of the present invention, including a gear with a magnet housed therein and a modular belt.
Figure 5 shows an exploded view of the gear which is shown in Figure 4 and is part of the tensioning system for a conveyor belt object of the present invention.
Figure 5A shows a view of multiple gears in which each gear is arranged in a common square shaft. The gears correspond to the practical embodiment shown in Figure 5.
Figure 6 shows the tensioning system for a conveyor belt shown in Figure 4 including a second gear in the return line, according to an embodiment of the present invention.
Figure 7 shows the tensioning system for a conveyor belt object of the present invention in a practical embodiment including an electromagnet inserted in the gear.
Figure 8 shows a view of the gear and electromagnet assembly that is used in Figure 7 and is part of the sensor system for a conveyor belt object of the present invention.
Figure 9 shows a view of the assembly of a gear with an electromagnet that is used in Figure 7 and is part of the sensor system for a conveyor belt object of the present invention in Figure 8.
Figure 10 shows a view of a practical embodiment of the tensioning system for a conveyor belt object of the present invention in which the conveyor belt is a belt of the type referred to as positive drive conveyor belts.
Figure 11 shows a view of a belt drive which can be used in some practical embodiments to replace the gears with a magnet or electromagnet of the particular embodiments of Figures 1 to 10.
Figure 12 shows a view of a belt drive with a toothed gear ring which can be used in some practical embodiments to replace the gears with a magnet or electromagnet of the particular embodiments of Figures 1 to 11.

### DESCRIPTION OF A DETAILED EMBODIMENT OF THE INVENTION

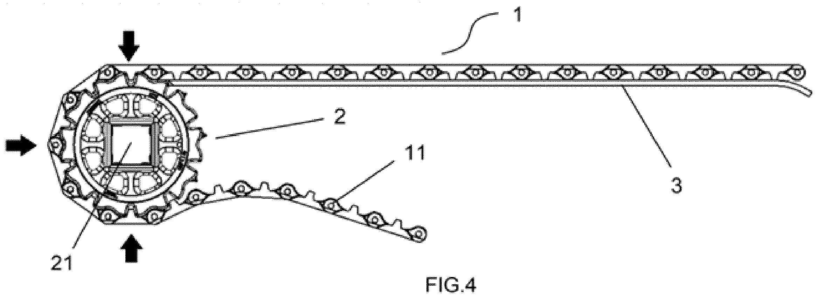

In a first practical embodiment of the invention (shown in Figure 4), the conveyor belt (1) comprises a plurality of modules (11) which are attached to one another in an articulated manner and extend transverse to a direction of movement, indicated with an arrow, of the conveyor belt (1) from a first side edge to a second opposite side edge, and which modules have the particularity that there are located in each of the modules (11) ferric components or ferromagnetic elements which will be attracted to the shaft (21) of the gear (2) due to the magnetic field created by at least one magnet (22) or by a plurality of magnets (23) housed in said gear (2). In this particular embodiment, the gear (2) includes the presence of a magnet (22) in the engagement region uniformly attracting all those ferric components or ferromagnetic elements located in the modules.

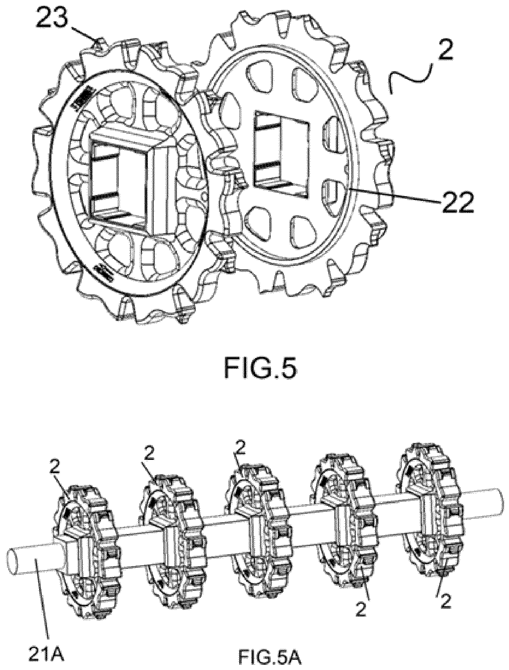

Figure 4 shows how the magnetic field created by a magnet (22) inserted in the gear (2) attracts the conveyor belt (1). The inner structure of the gear (2) shown in Figure 4 can be seen in Figure 5. Figure 5A shows a practical embodiment with multiple gears arranged on a common shaft (21a), which can constitute a practical solution for conveyor belts (1) with a large conveyance surface. The conveyor belt (1) is completed with lower flats (3).

In another practical embodiment, the conveyor belt (1) comprises or houses ferric or ferromagnetic elements or generally any material that may be attracted by a magnetic, electric, or electromagnetic field, such that it can be attracted to the traction system through the action of the magnetic or electric fields generated in the traction system itself, in this particular embodiment in the gear (2) by means of the magnet (22). In another practical embodiment, the conveyor belt itself is entirely manufactured from the previously indicated materials to be used in the manner as described above.

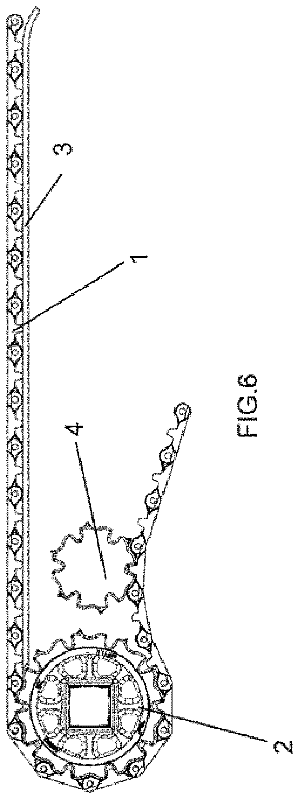

Manufacturing the conveyor belt (1) with components which are attracted by the magnet (22) inserted in the gear (2) around the shaft (21) will prevent the belt from disengaging. However, at the exit point, the conveyor belt (1) must necessarily become disengaged, and given that the generated magnetic field is permanent, the presence of an element which disengages the belt from the gear in the return or exit point may be required. To that end, it is possible to place a disengaging element (4), which may be a second gear, a roller, a flat, or a sliding runner at the exit point, in the return path, forcing the belt to detach from the gear, as shown in Figure 6. Said passage through the disengaging element (4) so that the belt detaches from the gear is in favor of articulation and is not a reverse rotation, like in prior art studies. In other words, the passage is necessary, but in this case it is more positive than reverse rotation because the conveyor belt (1) suffers less.

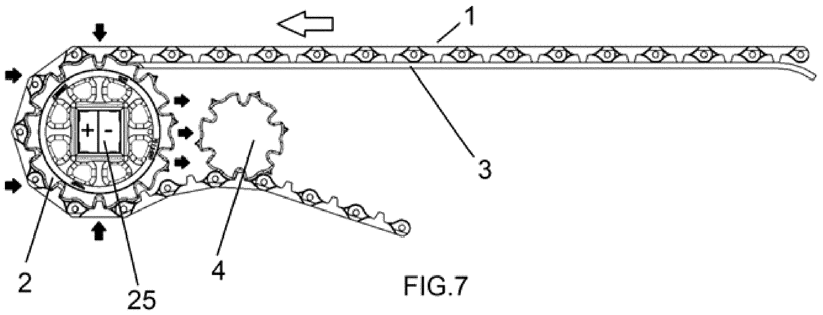

Figure 7 shows a practical embodiment which is technically more complex than the preceding embodiment, but it also more efficient. This practical embodiment consists of the use of electromagnets (25) inserted in the gear (2) attracting the conveyor belt (1) in the engagement area, and by annulling the field (by means of eliminating the passage of current through the electromagnet (25) or changing the polarity (+/-) thereof) it allows detachment as the belt (1) passes through the exit point, at the beginning of the return path. To that end, in this practical embodiment magnets must be inserted in the modules (11) of the conveyor belt (1), or the belt (1) itself must comprise said magnets so to establish the mentioned attraction/non-attraction effect between the belt (1) and the gear (2). In this case, a magnetic attraction of the belt (1) to the teeth of the gear (2) can be generated at an angle of about 180° and this same magnetic attraction force will disappear or the polarity thereof can even be changed so as to repel the belt (1) and make the detachment thereof easier, as shown in Figure 7. Figure 7 also depicts the disengaging element (4) which is completely optional. In fact, in this embodiment detachment occurs when the field which assured the engagement disappears. Nevertheless, for safety reasons, in some applications it may be suitable, i.e., it is not necessary, to place an additional disengaging element (4).

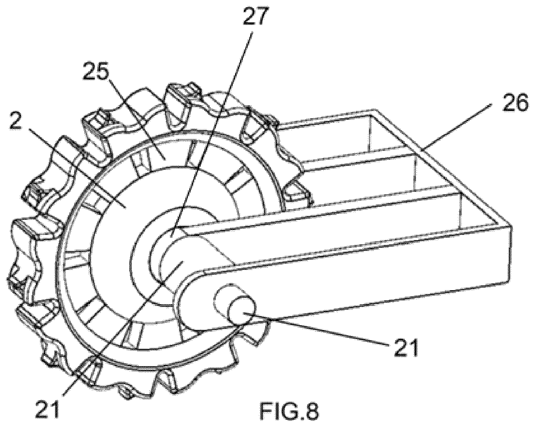

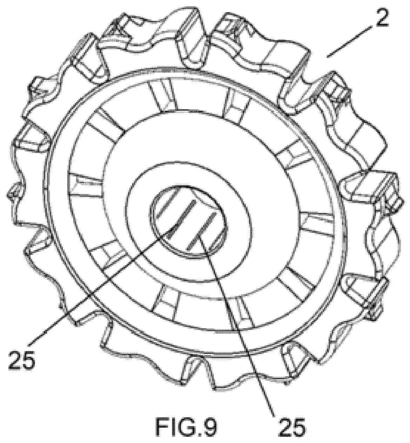

Figure 8 shows an embodiment of the gear (2) with electromagnets (25) in which the entire assembly is shown, including a frame (26) integrally attached to the shaft (21) of the gear (2) and bushings (27) inserted on the shaft (21) in which electrical means configured for applying current are located. Figure 9 shows how the electromagnets (25) are radially distributed with respect to the shaft (21), where current can therefor be applied in one direction in a specific group of electromagnets (25) and not be applied anymore in another direction in another group of electromagnets (25).

Three objectives are achieved with this practical embodiment: (i) it is assured that the belt is engaged at all times as a result of the magnetic attraction of the belt to the shaft, thereby preventing the belt from skipping the teeth of the gear; (ii) detachment is assured so that the belt follows its return path, although as best seen in Figure 7, it is also possible to incorporate a disengaging element (4) in the mentioned return path; and (iii) additionally, by using electromagnets (25) it is possible to establish control over the created magnetic field, so a real-time, adaptive regulation for regulating the tension or attraction of the belt (1) can be established during passage over the gear (2) of the traction system.

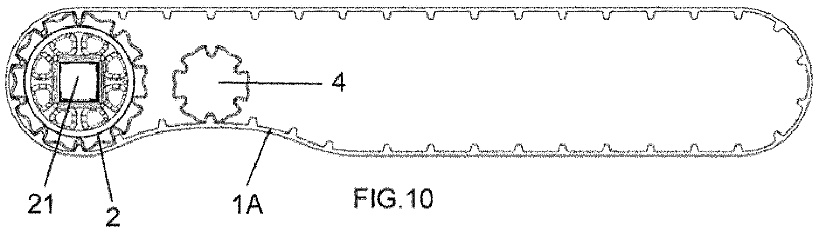

Figure 10 shows an embodiment in which the conveyor belt is a belt of the type referred to as flat belts with positive traction and normally made of polyurethane (1A), i.e., a non-modular, continuous belt. Nevertheless, it is obvious for one skilled in the art that the same advantages of the elements described for the embodiments shown in Figures 1 to 9 are directly applicable to this practical embodiment, with the exception that the ferric or magnetic elements are inserted in or integrally attached to this other type of belts.

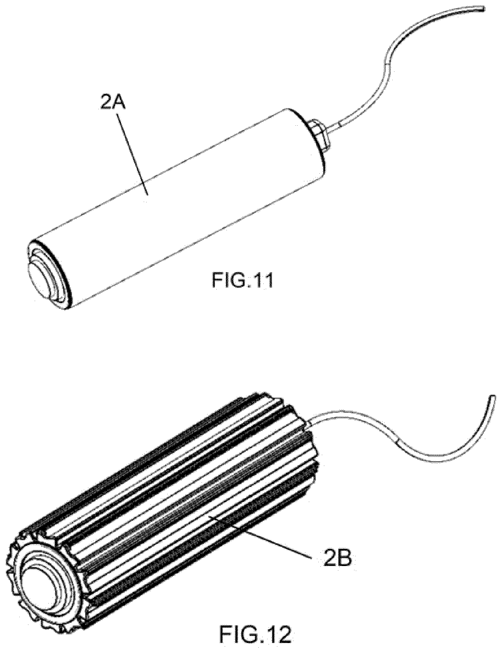

Figures 11 and 12 show other practical embodiments of the traction system. The embodiments shown in Figures 1 to 10 always mention, as an example, a toothed gear (2) inserted on a shaft (21, 21A), wherein the lower surface of the belt (1, 1A) has grooves suitable for receiving the teeth of the gear (2) when the belt (1, 1A) wraps around the pulley between an entry point and an exit point. Nevertheless, Figure 11 shows a smooth belt drive (2A) used mainly for flat belts without grooves and as the drive shaft for gears designed for such purpose, whereas Figure 12 shows a toothed belt drive (2B) which will furthermore act as a drive shaft. Both elements may be useful for replacing or substituting the gear (2) that has been described in certain practical embodiments. Nevertheless, all the features indicted for the preceding embodiments are directly applicable in these elements, particularly the use of magnets (22) or electromagnets (25) for configuring a specific magnetic field which attracts the elements inserted in the belt (1, 1A) to the actual shaft (21) thereof.

Finally, all the embodiments allow achieving the ultimate objective of the invention which is a tensioning system for a conveyor belt comprising a belt manufactured with materials including ferric or magnetic components which can be included during the actual manufacturing process thereof or by integrally attaching said materials to the belt, and having the particularity of being attracted to the traction system by means of forces created by magnetic and/or electric fields. Furthermore, as discussed the system is "reversible" to a certain extent given that the field-generating element can be arranged either in the drive element (2, 2A, 2B) like in the preceding examples, or in the belt (1, 1A) itself, interacting with the ferric, magnetic, or electromagnetic elements located in the opposite element. In other words, if the field-generating element (the "active" element) is arranged in the belt (1, 1A), the "passive" element (i.e., the element being attracted) will be arranged in the drive element (2, 2A, 2B) and vice versa.

## Claims

1. Tensioning system for a direct drive conveyor belt (1, 1A) comprising an endless belt and including at least one ferric and/or magnetic and/or electromagnetic component and at least one drive element (2, 2A, 2B) configured for driving the conveyor belt (1, 1A) between an entry point and an exit point and which conveyor belt is **characterized in that** the tensioning system comprises at least one electric or magnetic field-generating element (22, 25) integrated in the drive element (2, 2A, 2B) or in the conveyor belt (1, 1A) and configured for attracting the ferric, magnetic or electromagnetic components of the conveyor belt (1, 1A) to a shaft of the drive element (2, 2A, 2B), or vice versa, for attracting them from the drive shaft (2, 2A, 2B) to the conveyor belt (1, 1A), through the action of said electric or magnetic field.

2. Tensioning system according to claim 1, wherein the drive element (2, 2A, 2B) comprises at least one magnet (22) arranged around the shaft of the drive element (2, 2A, 2B).

3. Tensioning system according to claim 1, wherein the drive element (2, 2A, 2B) comprises a plurality of electromagnets (25) distributed around the shaft of the drive element (2, 2A, 2B).

4. Tensioning system according to any one of claims 1 to 3 comprising a disengaging element (4) at the exit point of the conveyor belt (1, 1A) with respect to the drive system (2, 2A, 2B).

5. Tensioning system according to any one of claims 1 to 4, wherein the ferric and/or magnetic and/or electromagnetic elements are inserted in the conveyor belt (1, 1A).

6. Tensioning system according to any one of claims 1 to 4, wherein the conveyor belt (1, 1A) is manufactured with ferric and/or magnetic and/or electromagnetic elements.

7. Tensioning system according to any one of claims 1 to 6, wherein the drive system is a gear (2) with a plurality of teeth, such that the teeth of the gear (2) are suitable for being housed in a plurality of grooves or cavities arranged on the lower face of the conveyor belt (1, 1A), wherein said cavities or grooves are suitable for receiving the teeth when the belt (1, 1A) wraps around the gear (2) to an exit point.

8. Tensioning system according to any one of claims 1 to 6, wherein the drive system is a smooth belt drive (2A).

9. Tensioning system according to any one of claims 1 to 6, wherein the drive system is a toothed belt drive (2B).

10. Tensioning system according to any one of claims 1 to 9, wherein the conveyor belt (1) comprises a plurality of modules (11).

11. Tensioning system according to any one of claims 1 to 9, wherein the conveyor belt (1A) is a belt of the type referred to as flat belts with positive traction.

12. Tensioning system according to any one of claims 1 to 9, wherein the conveyor belt is a continuous PVC belt.

13. Method for tensioning a direct drive conveyor belt (1, 1A), which is implemented in a system such as the one described in any one of claims 1 to 11 and which comprises an endless belt and at least one drive element (2, 2A, 2B) configured for driving the conveyor belt (1, 1A) between an entry point and an exit point, and which method is **characterized in that** it comprises the steps of:
integrally attaching or inserting a ferric and/or magnetic and/or electromagnetic component in the conveyor belt (1, 1A) and integrating at least one electric or magnetic field-generating element (22,25) in the drive element (2, 2A, 2B) or in the conveyor belt (1, 1A) itself; and
generating an electric or magnetic field in an attachment area between the drive element (2, 2A, 2B) and the conveyor belt (1, 1A) such that the ferric or magnetic or electromagnetic components of the conveyor belt (1, 1A) are attracted to a shaft of the drive element (2, 2A, 2B) through the action of said electric or magnetic field.

14. Method according to claim 1, wherein it further comprises a step of annulling the electric or magnetic field by means of eliminating the passage of current through the electromagnet (25) or by means of changing the polarity (+/-) thereof such that it allows passage of the belt (1) through the exit point, at the beginning of the return path.
